# EUROPÄISCHE PATENTSCHRIFT

(11) **EP 1 230 727 B1**
(45) Veröffentlichungstag und Bekanntmachung des Hinweises auf die Patenterteilung: **16.07.2008**
(21) Anmeldenummer: 01978310.9
(22) Anmeldetag: 29.08.2001
(51) Int. Cl.: H02K 41/03, H02K 1/27

(54) **BAUEINHEIT EINES LINEARMOTORS UND VERFAHREN ZUR MONTAGE DIESER BAUEINHEIT**
LINEAR MOTOR ASSEMBLY AND A METHOD FOR MOUNTING SAID ASSEMBLY
UNITE D'UN MOTEUR LINEAIRE ET PROCEDE POUR LE MONTAGE DE CETTE UNITE

(30) Priorität: 31.08.2000 CH 169800
(43) Veröffentlichungstag der Anmeldung: 14.08.2002
(73) Patentinhaber: Etel S.A., 2112 Môtiers (CH)
(72) Erfinder: MOREL, Jean-Pierre, F-25300 Les Fourgs (FR); FREUND, Walter, 2205 Montmollin (CH)
(74) Vertreter: Hofmann, Ernst
(86) Internationale Anmeldenummer: PCT/EP2001/009913
(87) Internationale Veröffentlichungsnummer: WO 2002/019496

(56) Entgegenhaltungen:
- DE-A- 19 853 250
- US-A- 5 952 742
- PATENT ABSTRACTS OF JAPAN vol. 012, no. 308 (E-647), 22. August 1988 (1988-08-22) & JP 63 073865 A (SUMITOMO ELECTRIC IND LTD), 4. April 1988 (1988-04-04)

## Beschreibung

Die Erfindung betrifft eine Baueinheit eines Linearmotors gemäß dem Oberbegriff des Anspruchs 1 und ein Verfahren zur Montage dieser Baueinheit.

Ein Linearmotor wird in verschiedenen Gebieten als Antrieb eingesetzt, beispielsweise bei Werkzeugmaschinen, Bestückungs- oder Bondautomaten und Förderanlagen.

Ein Linearmotor besteht aus einer Baueinheit mit einem Träger, auf dem in Antriebsrichtung mehrere Permanentmagnete aufgebracht sind, die eine Laufbahn für einen relativ dazu beweglichen Läufer definieren. Diese Baueinheit wird auch als Sekundärteil bezeichnet. Der Läufer wechselwirkt mit den Magneten und setzt diese Wechselwirkung in eine translatorische Bewegung um.

Beim Betrieb des Linearmotors können Fremdkörper wie Späne oder Werkzeugteile zwischen dem Läufer und den Permanentmagneten geraten und sich dort verhaken. Besteht die Baueinheit aus mehreren aneinandergereihten Trägern, können sich diese Fremdkörper auch an den Stoßfugen der Träger verhaken. Um ein derartiges Verhaken zu vermeiden, wurde gemäß der DE 198 53 250 bereits vorgeschlagen, die Permanentmagnete mit einem magnetischen Abdeckblech abzudecken und die Permanentmagnete seitlich mit einer Kunstharzmasse zu vergießen.

Zur Montage dieser Baueinheit sind Bohrlöcher im Träger und in der Kunstharzmasse vorgesehen. Dies hat den Nachteil, dass sich Fremdstoffe in diesen Löchern verhaken können.

In der US 5,952,742 A ist eine Baueinheit eines Linearmotors offenbart, bei dem Permanentmagnete auf einem Träger befestigt sind. Die Ausrichtung der Magnete erfolgt durch Stifte, die in Bohrungen des Trägers eingebracht sind. Die Permanentmagnete und die Stifte sind mit einer Abdeckung geschützt.

Die Befestigung des Trägers an einem Maschinenteil erfolgt durch Sacklöcher, die an der Unterseite des Trägers angebracht sind, was die Befestigung erschwert.

Aufgabe der Erfindung ist es daher, eine Baueinheit eines Linearmotors, bestehend aus einem Träger und mehreren Permanentmagneten derart auszugestalten, dass ein sicherer Betrieb gewährleistet ist und eine einfache Herstellung ermöglicht wird.

Diese Aufgabe wird durch eine Baueinheit mit den Merkmalen des Anspruchs 1 gelöst.

Eine weitere Aufgabe der Erfindung ist es, ein Verfahren zur Montage einer Baueinheit eines Linearmotors anzugeben, mit dem die Baueinheit einfach an einem Maschinenteil befestigt werden kann und die Befestigung derart erfolgt, dass die Befestigungsmittel beim Betrieb des Linearmotors nicht stören.

Diese Aufgabe wird durch ein Verfahren mit den Merkmalen des Anspruchs 11 gelöst.

Vorteilhafte Ausgestaltungen sind in den abhängigen Ansprüchen angegeben.

Die Erfindung wird anhand von Ausführungsbeispielen erläutert.

Es zeigt
- Figur 1: eine Draufsicht auf mehrere Träger,
- Figur 2: einen Querschnitt II-II gemäß Figur 1,
- Figur 3: eine Draufsicht der Träger mit Abdeckleisten,
- Figur 4: einen Querschnitt IV-IV gemäß Figur 3,
- Figur 5: eine Draufsicht der Träger im vollständig abgedeckten Zustand,
- Figur 6: einen Querschnitt VI-VI gemäß Figur 5,
- Figur 7: einen Längsschnitt durch eine Abdeckleiste,

- Figur 8: eine zweite Befestigungsmöglichkeit der Abdeckleiste und
- Figur 9: eine dritte Befestigungsmöglichkeit der Abdeckleiste.

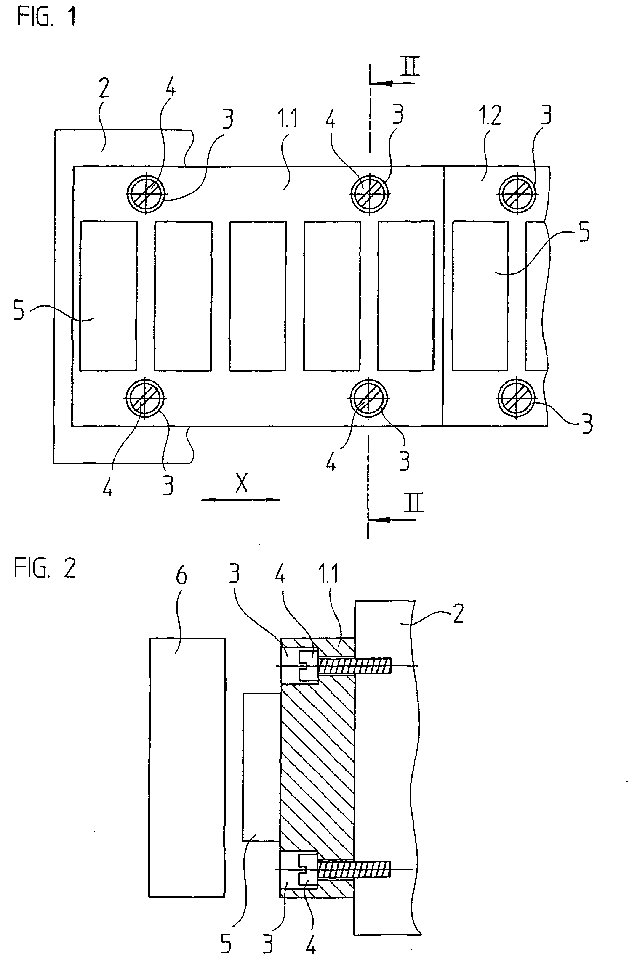

In Figur 1 ist eine Draufsicht einer Baueinheit eines Linearmotors dargestellt, die auch als Sekundärteil bezeichnet wird. Diese Baueinheit besteht aus mehreren Trägern 1.1, 1.2, die aneinandergereiht auf einem Maschinenteil 2 montierbar sind. Die Träger 1.1, 1.2 bestehen in der Regel aus ferrromagnetischem Material. Jeder Träger 1.1, 1.2 weist mehrere voneinander beabstandete Bohrungen 3 auf, in die Schrauben 4 zur Fixierung der Träger 1.1, 1.2 am Maschinenteil 2 eingreifen. Auf den Trägern 1.1, 1.2 sind mehrere Permanentmagnete 5 hintereinander angeordnet, die mit einem in Figur 2 nur schematisch dargestellten Läufer 6 wechselwirken und eine Bewegung des Läufers 6 relativ zu den Trägern 1.1, 1.2 in Verschieberichtung X verursachen.

In Figur 2 ist ein Querschnitt II-II gemäß Figur 1 dargestellt. Es ist ersichtlich, dass die Bohrungen 3 in den Trägern 1.1, 1.2 so tief ausgebildet sind, dass nach dem Festschrauben der Träger 1.1, 1.2 am Maschinenteil 2 (erster Montageschritt) die Köpfe der Schrauben 4 vollständig in der Bohrung 3 aufgenommen sind.

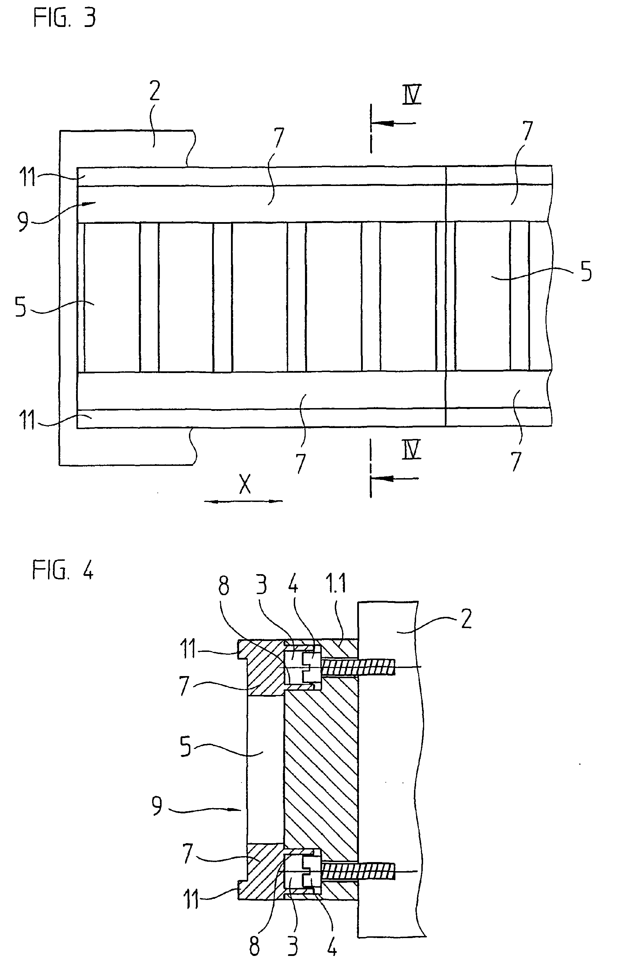

Nach dem in den Figur 1 und 2 dargestellten ersten Montageschritt - Befestigen der Träger 1.1 und 1.2 am Maschinenteil 2 - erfolgt ein zweiter Montageschritt, der in den Figuren 3 und 4 dargestellt ist.

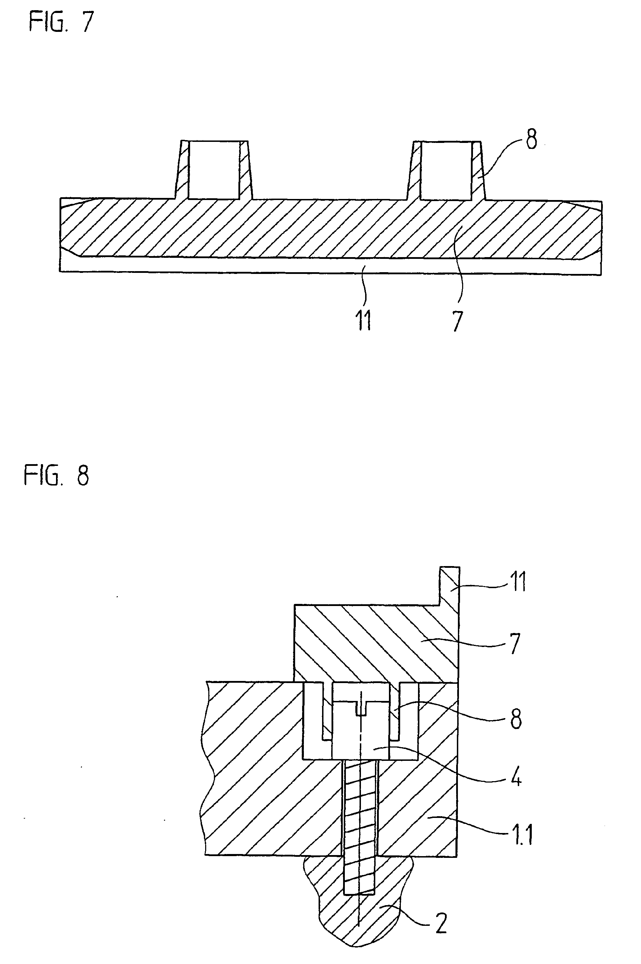

In diesem zweiten Montageschritt wird jeweils an den in Verschieberichtung X (Laufbahn des Läufers 6) verlaufenden Randbereichen der Träger 1.1 und 1.2 eine Abdeckleiste 7 befestigt. Eine derartige Abdeckleiste 7 ist in Figur 7 schematisch vergrößert dargestellt. Sie besteht aus nichtmagnetischem Material, insbesondere aus Kunststoff (Spritzgussteil) und weist Vorsprünge 8 auf, mit denen sie in den Bohrungen 3 am Träger 1.1, 1.2 geklemmt wird.

Der Außendurchmesser der Vorsprünge 8 als Klemmelemente entspricht dem Innendurchmesser der Bohrungen 3, so dass die Bohrungen 3 eine Fügepassung für die Vorsprünge 8 bilden. Durch das Vorsehen von mehreren - insbesondere zwei - in Verschieberichtung X voneinander beabstandeten Vorsprüngen 8 ist jede Abdeckleiste 7 durch das Aufdrücken auf seinen Träger 1.1, 1.2 automatisch ausgerichtet. Fertigungstechnisch besonders vorteilhaft ist es, wenn die Klemmelemente bzw. Vorsprünge 8 an der Abdeckleiste 7 einstückig angeformt sind.

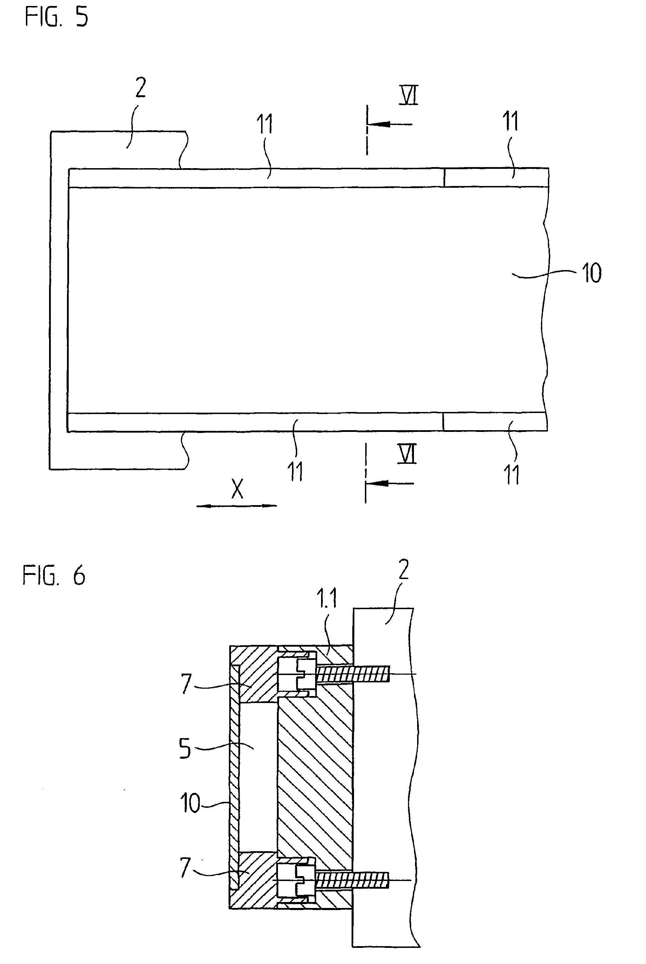

Besonders vorteilhaft ist es, wenn die Abdeckleisten 7 einen Kanal 9 bilden, der zur Aufnahme eines in einem dritten Montageschritt aufzubringenden Abdeckbandes 10 dient. Damit das Abdeckband 10 gut aufliegt entspricht die Höhe der Abdeckleisten 7 im Auflagebereich des Abdeckbandes 10 der Höhe der Permanentmagnete 5. Zur Bildung des Kanals 9, durch den das Abdeckband 10 ausgerichtet ist, weisen die Abdeckleisten 7 jeweils einen seitlichen Steg 11 auf, dessen Höhe der Dicke des Abdeckbandes 10 entspricht. Die somit vollständig montierte Baueinheit ist in den Figuren 5 und 6 dargestellt.

Wenn das Abdeckband 10 ein Blech aus ferromagnetischem Material, beispielsweise Edelstahl ist, sind keine zusätzlichen Maßnahmen zur Fixierung des Abdeckbandes 10 erforderlich, da es selbstständig durch Magnetkraft an den Permanentmagneten 5 haftet. Das Abdeckblech 10 wird vorteilhafterweise endlos in die Kanäle der in Verschieberichtung X aneinandergereihten Träger 1.1 und 1.2 eingelegt, beispielsweise durch Abrollen von einer Rolle.

Durch diese Maßnahmen ist auf einfache Weise eine Abdeckung 7 und 10 für die Bohrungen 3, die Schrauben 4 und die Permanentmagnete 5 geschaffen. Die einzelnen Elemente dieser Abdeckung in Form von Abdeckleisten 7 und Abdeckband 10 können dem Anwender des Linearmotors zur Verfügung gestellt werden, der sie erst bei der Montage der Träger 1.1, 1.2 an ein Maschinenteil einsetzt. Eine leichte Montage und auch Demontage ist möglich. Die Abdeckleisten 7 können in beliebiger Länge aneinandergereiht werden, abhängig von der Anzahl der zu montierenden Träger 1.1, 1.2.

Die in Richtung des Läufers 6 weisende Oberfläche der Träger 1.1, 1.2 ist vollständig abgedeckt und eben, so dass eindringende Fremdkörper keine Möglichkeit des Verhakens mehr haben. Die Betriebssicherheit des Linearmotors ist somit gewährleistet.

Die Erfindung ist am Beispiel von zwei Trägern 1.1 und 1.2 erläutert, sie kann aber auch erfolgreich bei nur einem Träger oder bei mehr als zwei Trägern eingesetzt werden.

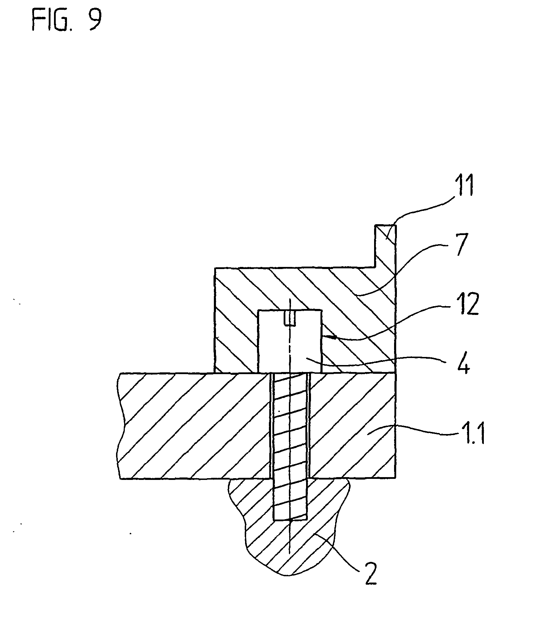

Wie in Figur 8 dargestellt ist, kann die Abdeckleiste 7 auch am Außenumfang der Schraube 4 fixiert werden. Dabei muss für die Schraube 4 keine Bohrung 3 zur Aufnahme des Kopfes der Schraube 4 vorgesehen sein, wie in Figur 9 schematisch dargestellt ist. Anstelle eines Vorsprungs 8 ist zur Klemmung eine Ausnehmung 12 an der Abdeckleiste 7 vorgesehen, welche den Kopf der Schraube 4 klemmend umgreift.

Bei dem oben erläuterten Beispiel ist die Länge einer Abdeckleiste 7 an die Länge der Träger 1.1, 1.2 angepasst, indem die Länge einer Abdeckleiste 7 der Länge eines Trägers 1.1, 1.2 entspricht. Eine Abdeckleiste 7 kann aber auch länger gewählt werden, insbesondere über mehrere Träger 1.1, 1.2 reichen. Vorteilhaft kann es auch sein, wenn die Abdeckleiste 7 aus einem biegbar elastischen Material -insbesondere Kunststoff- besteht, so dass die Abdeckleiste 7 wie das Abdeckband 10 aufrollbar ist und diese einstückig durch Abrollen eine Vielzahl von Befestigungselemente 4 abdeckt. Aufrollbar bedeutet dabei, dass die Elastizität des Materials so gewählt ist, dass ein Biegeradius von etwa 30 cm möglich ist, so dass die Abdeckleiste 7 aufgerollt auch für große Längen noch handhabbar ist.

## Patentansprüche

1. Baueinheit eines Linearmotors mit
- einer Folge von Permanentmagneten (5) auf einem Träger (1.1, 1.2),
- Befestigungselementen (4), mit denen der Träger (1.1, 1.2) an einem Maschinenteil (2) befestigbar ist, und
- einer Abdeckung (10) der Permanentmagnete (5), **dadurch gekennzeichnet, dass**
- die Baueinheit zumindest ein Abdeckelement in Form einer Abdeckleiste (7) aufweist, die am Träger (1.1, 1.2) neben den Permanentmagneten (5) lösbar befestigt ist, und mit der die Befestigungselemente (4) abgedeckt sind.

2. Baueinheit nach Anspruch 1, **dadurch gekennzeichnet, dass** an der Abdeckleiste (7) zumindest ein Klemmelement (8) angeformt ist, das an einer korrespondierenden Passung (3) des Trägers (1.1, 1.2) oder einem der Befestigungselemente (4) klemmt.

3. Baueinheit nach Anspruch 2, **dadurch gekennzeichnet, dass** an die Abdeckleiste (7) mehrere in Richtung (X) der Laufbahn des Läufers (6) voneinander beabstandete Klemmelemente (8) angeformt sind, die jeweils an einer korrespondierenden Passung (3) des Trägers (1.1, 1.2) oder des Befestigungselementes (4) klemmen.

4. Baueinheit nach Anspruch 2 oder 3, **dadurch gekennzeichnet, dass** die Abdeckleiste (7) zumindest einen Vorsprung (8) als Klemmelement aufweist, der in eine korrespondierende Vertiefung (3) des Trägers (1.1, 1.2) eingreift und dadurch die Abdeckleiste (7) am Träger (1.1, 1.2) klemmt.

5. Baueinheit nach Anspruch 4, **dadurch gekennzeichnet, dass** die Befestigungselemente Schrauben (4) sind und zur Aufnahme der Schrauben (4) im Träger (1.1, 1.2) jeweils eine Vertiefung (3) vorgesehen ist, in die der Vorsprung (8) klemmend eingreift.

6. Baueinheit nach einem der vorhergehenden Ansprüche, **dadurch gekennzeichnet, dass** jeweils an den beiden Randbereichen des Trägers (1.1, 1.2) in Richtung (X) der Laufbahn eines Läufers (6) verlaufende Abdeckleisten (7) befestigt sind.

7. Baueinheit nach Anspruch 6, **dadurch gekennzeichnet, dass** die Permanentmagnete (5) mit einem Abdeckband (10) abgedeckt sind, das partiell auf den Abdeckleisten (7) aufliegt, wobei die Abdeckleisten (7) im Auflagebereich eine Höhe entsprechend der Höhe der Permanentmagnete (5) und außerhalb des Auflagebereichs eine Höhe entsprechend der Höhe der Permanentmagnete (5) plus der Dicke des Abdeckbandes (10) haben.

8. Baueinheit nach Anspruch 7, **dadurch gekennzeichnet, dass** das Abdeckband ein Blech (10) aus ferromagnetischem Material ist.

9. Baueinheit nach Anspruch 7 oder 8, **dadurch gekennzeichnet, dass** mehrere aneinandergereihte Träger (1.1, 1.2) und Abdeckleisten (7) vorgesehen sind, und dass das Abdeckband (10) über mehrere Träger (1.1, 1.2) ununterbrochen verläuft.

10. Baueinheit nach einem der vorhergehenden Ansprüche, **dadurch gekennzeichnet, dass** die Abdeckleiste (7) biegbar elastisch und aufrollbar ausgebildet ist.

11. Verfahren zur Montage einer Baueinheit eines Linearmotors an einem Maschinenteil (2) mit folgenden Verfahrensschritten:
a) Befestigen zumindest eines Trägers (1.1, 1.2), der mehrere Permanentmagnete (5) aufweist, mittels mehrerer Befestigungselemente (4) an dem Maschinenteil (2);
b) Aufsetzen von Abdeckelementen in Form von Abdeckleisten (7) auf den Träger (1.1, 1.2), wobei die Abdeckleisten (7) die Befestigungselemente (4) abdecken und lösbar am Träger (1.1, 1.2) geklemmt werden;
c) Abdecken der Permanentmagnete (5) mittels eines Abdeckbandes (10).

## Claims

1. Linear motor assembly, comprising a sequence of permanent magnets (5) on a support (1.1, 1.2), fastening elements (4) by means of which the support (1.1, 1.2) can be fastened to a machine element (2), and a cover (10) for the permanent magnets (5), **characterised in that** the assembly has at least one cover element in the form of a cover strip (7), which is releasably attached to the support (1.1, 1.2) next to the permanent magnets (5) and with which the fastening elements (4) are covered.

2. Assembly according to claim 1, **characterised in that** at least one clamping element (8) is formed on the cover strip (7) and is clamped onto a corresponding fitting (3) of the support (1.1, 1.2), or onto one of the fastenings element (4).

3. Assembly according to claim 2, **characterised in that** a plurality of clamping elements (8), which are spaced apart from each other in the direction (X) of the track of the runner (6), are formed on the cover strip (7) and each clamp onto a corresponding fitting (3) of the support (1.1, 1.2) or of the fastening element (4).

4. Assembly according to either claim 2 or claim 3, **characterised in that** the cover strip (7) has at least one projection (8) as a clamping element, which engages in a corresponding recess (3) in the support (1.1, 1.2) and thus clamps the cover strip (7) onto the support (1.1, 1.2).

5. Assembly according to claim 4, **characterised in that** the fastening elements are screws (4), and **in that** a respective recess (3), in which the projection (8) clampingly engages, is provided to receive each of the screws (4) in the support (1.1, 1.2).

6. Assembly according to any one of the preceding claims, **characterised in that** cover strips (7), extending in the direction (X) of the track of a runner (6), are respectively fastened to the two edge regions of the support (1.1, 1.2).

7. Assembly according to claim 6, **characterised in that** the permanent magnets (5) are covered by a covering tape (10), which partially rests on the cover strips (7), the cover strips (7) having a height in the resting region which corresponds to the height of the permanent magnets (5) and having a height outside the resting region which corresponds to the height of the permanent magnets (5) plus the thickness of the covering tape (10).

8. Assembly according to claim 7, **characterised in that** the covering tape is a sheet metal plate (10) made of ferromagnetic material.

9. Assembly according to either claim 7 or claim 8, **characterised in that** a plurality of supports (1.1, 1.2) and cover strips (7), arranged together, are provided, and **in that** the covering tape (10) extends uninterrupted over a plurality of supports (1.1, 1.2).

10. Assembly according to any one of the preceding claims, **characterised in that** the cover strip (7) is configured so as to be flexibly resilient and able to be rolled up.

11. Method for mounting an assembly of a linear motor on a machine element (2), comprising the following process steps:
a) fastening at least one support (1.1, 1.2), which comprises a plurality of permanent magnets (5), to the machine element (2) by means of a plurality of fastening elements (4);
b) placing cover elements in the form of cover strips (7) on the support (1.1, 1.2), said cover strips (7) covering the fastening elements (4) and being releasably clamped onto the support (1.1, 1.2);
c) covering the permanent magnets (5) by means of a covering tape (10).

## Revendications

1. Unité d'un moteur linéaire, comprenant :
- une série d'aimants permanents (5) montés sur un support (1.1, 1.2),
- des éléments de fixation (4) par lesquels le support (1.1, 1.2) peut être fixé sur une partie de machine (2),
- une couverture (10) des aimants permanents (5),
cette unité étant **caractérisée en ce qu'**elle présente au moins un élément de couverture sous la forme d'une barrette de couverture (7) qui peut être fixée de manière amovible sur le support (1.1, 1.2) à côté des aimants permanents (5) et qui recouvre les éléments de fixation (4).

2. Unité selon la revendication 1, **caractérisée en ce que** sur la barrette de couverture (7) peut être moulé un élément de serrage (8) qui exerce son action de serrage sur un ajustement (3) correspondant du support (1.1, 1.2) ou sur un élément de fixation (4).

3. Unité selon la revendication 2, **caractérisée en ce que** sur la barrette de couverture (7) sont moulés plusieurs éléments de serrage (8) qui sont espacés les uns des autres selon la direction (X) de la trajectoire de l'induit, chacun d'eux exerçant son action de serrage sur un ajustement (3) correspondant du support (1.1, 1.2) ou de l'élément de fixation (4).

4. Unité selon la revendication 2 ou 3, **caractérisée en ce que** la barrette de couverture (7) présente en tant qu'élément de serrage au moins une partie en saillie (8) qui est engagée dans une cavité (3) correspondante de support (1.1, 1.2) et serre ainsi la barrette de couverture (7) sur le support (1.1, 1.2).

5. Unité selon la revendication 4, **caractérisée en ce que** les éléments de fixation sont des vis (4) et, pour accueillir chacune d'elles, il est prévu sur le support (1.1, 1.2) une cavité dans laquelle est en prise avec serrage la saillie (8).

6. Unité selon une des revendications précédentes, **caractérisée en ce que** sur les deux zones marginales du support (1.1, 1.2) sont fixées des barrettes de couverture (7) s'étendant selon la direction (X) de la trajectoire de l'induit (6).

7. Unité selon la revendication 6, **caractérisée en ce que** les aimants permanents (5) sont recouverts par une bande de couverture (10) appliquée en partie sur les barrettes de couverture (7) qui présentent, dans cette zone d'application, une hauteur correspondant à celles des aimants permanents (5) et en dehors de cette zone une hauteur correspondant à celle des aimants permanents (5) augmentée de l'épaisseur de la bande de couverture (10).

8. Unité selon la revendication 7, **caractérisée en ce que** la bande de couverture (10) est une tôle (10) en matériau ferromagnétique.

9. Unité selon la revendication 7 ou 8, **caractérisée en ce qu'**il est prévu plusieurs supports (1.1, 1.2) et barrettes de couverture (7) se faisant suite, la bande de couverture (10) s'étendant sans interruption sur plusieurs supports (1.1, 1.2).

10. Unité selon une des revendications précédentes, **caractérisée en ce que** la barrette de couverture (7) peut être pliée et enroulée élastiquement.

11. Procédé de montage d'une unité d'un moteur linéaire sur une partie de machine (2), présentant les étapes suivantes :
a) fixation d'au moins un support (1.1, 1.2) qui présente plusieurs aimants permanents (5), sur la partie de machine (2) au moyen de plusieurs éléments de fixation (4),
b) pose d'éléments de couverture sous la forme de barrettes (7) sur le support (1.1, 1.2), ces barrettes de couverture (7) recouvrant les éléments de fixation (4) et étant fixés sur le support (1.1, 1.2) de manière amovible, par serrage,
c) couverture des aimants permanents (5) au moyen de la bande de couverture (10).
